Europäisches Patentamt

European Patent Office

Office européen des brevets

(19)

(11) Publication number: **0 066 690**
A2

# EUROPEAN PATENT APPLICATION

(12)

(21) Application number: **82102991.5**

(22) Date of filing: **07.04.82**

(51) Int. Cl.³: **B 60 C 15/02**

(30) Priority: **08.06.81 PC/US81/007 60**

(43) Date of publication of application: **15.12.82**
**Bulletin 82/50**

(84) Designated Contracting States: **BE DE FR GB IT SE**

(71) Applicant: **CATERPILLAR TRACTOR CO., 100 Northeast Adams Street, Peoria Illinois 61629 (US)**

(72) Inventor: **Groezinger, John James, Box 189, Bristol Hollow Road, Dunlap Illinois 61525 (US)**
Inventor: **Grawey, Charles Edward, 210 E. Orchard Place, Peoria Illinois 61603 (US)**

(74) Representative: **Wagner, Karl H., P.O. Box 246 Gewürzmühlstrasse 5, D-8000 Munich 22 (DE)**

(54) **High strength tire and wheel.**

(57) A high strength tire and wheel assembly (10) having a closed torus tire (14) mounted on a rim assembly (12). The tire (14) has shoulder portions (32, 32') adjacent the boundaries of tire (14) and rim assembly (12) contact. The rim assembly (12) includes elastomeric elements (44, 44') positioned intermediate the shoulder portions (32, 32') and a metallic rim portion (43). The tire and wheel assembly (10) also includes strengthening elements (50) extending circumferentially through the shoulder portions (32, 32'). A flange portion (48) on said rim assembly (12) serves to contain an outer edge (45) of each elastomeric element (44, 44'). The high strength tire and wheel assembly (10) runs cooler in high load situations than do existing tire and wheel assemblies.

## Description

## High Strength Tire and Wheel

### Technical Field

This invention relates generally to tire construction and more particularly to closed torus tires suited for high load, high rotational velocity applications, such as use on aircraft.

### Background Art

One of the greatest trials of a tire designer's ingenuity is the development of improved aircraft tires, especially tires for wide-body, commercial aircraft. This is due to the design strictures imposed by governmental regulation, materials limitations, and size and weight restrictions imposed by the aircraft designers.

The lack of stowage space in the wing of an aircraft mandates the use of comparatively small tires for large commercial aircraft. Furthermore, it is undesirable and often impractical to use a great number of tires. Hence, each tire is typically very heavily loaded. For example, a standard highway truck tire, such as the 11.00R-22.5, is rated for a load of 6040 lbs. at a typical inflation pressure. Commercial aircraft tires of similar diameter must often be capable of supporting an operating load of 26,000 lbs.

It is believed that great loading of these relatively small tires can best be achieved through the use of high operating pressures. Typically, these tires are operated at 200 psi. Governmental regulations in the United States and in many other countries mandate that these tires be able to sustain four times their rated pressure. Hence, it is necessary that such tires be capable of sustaining a pressure of 800 psi.

An additional factor is that such tires must be capable of rotation at approximately 1900 rpm to accommodate high aircraft ground velocity upon takeoff and landing. This is especially troublesome from the standpoint of centrifugal force. If the tire is insufficiently strong in the tread region, the enormous forces generated by the action of centrifugal force on this region can damage or destroy the tire.

The requirements discussed above are fulfilled by existing aircraft tires. These existing tires are of the beaded, bias type having, briefly, two circumferential beads, numerous sidewall bias plies extending between each bead and a tread region. Typically, these bias plies extend across the tread region, each bias ply passing from one bead to the other.

An inherent weakness of such tires is the necessity of a rim having a bead restraining portion on which the tire is mounted. Such a rim configuration serves to prevent outward axial movement of the bead portions of the tire. The high operating pressure of these tires and the very high potential transient pressures, often significantly exceeding the normal inflation pressure, impose tremendous loadings on the bead restraining portions of the rim. Should the force acting on the bead restraining portions induce a failure, fragmented metal missles can be produced. The potential results, such as a fuel tank rupture, are catastrophic. The probability of this occurring is reduced through the use of pressure and heat sensitive vents on the tires which serve to vent the tire to the atmosphere should a dangerous condition arise. The use of a tire requiring such a feature is not desirable. Further, it would be beneficial if aircraft tires could be constructed so that they did not impose these tremendous side loading forces upon their rims.

Another deficiency of existing aircraft tires is their use of a great number of bias plies. It is well known that as a tire rolls, the plies of the tire act against one another and result in the generation of heat. This is especially troublesome in the tread and sidewall regions where as many as 30 overlying plies are utilized to obtain the strength needed to counter the high pressure and centrifugal forces. Heat is quite deleterious to tires. If a tire becomes sufficiently hot, its rubber carcass can undergo degradation, resulting in damage to the tire. Slightly lower temperatures weaken a tire and accelerate its deterioration. The use of a tire having numerous plies, which serve to create a heat buildup problem, is undesirable. This problem is so acute that certain existing commercial aircraft tires, if subjected to a landing immediately following a take-off, will exceed their safe temperature limitation and necessarily must be scrapped.

Yet another inadequacy of existing aircraft tires is their poor performance in a run-flat situation. It is important that there be no severely adverse effect upon the operation of the aircraft should a tire fail or lose pressure. As previously discussed, standard aircraft tires are maintained on their rims by means of high internal pressure forcing the bead region of the tire against the bead retaining lip of the rim. If pressure is lost, the tire retaining force is decreased or lost. Typically, the heretofore utilized tires will become loose upon the rim and become subject to dislocation.

Additionally, the design strictures of standard tires require that they be very stiff in that half of the sidewall proximate the bead. This is a result of the fact that the existing theory of aircraft tire and wheel assembly design mandates the use of a very stiff tire as a means for obtaining a very high load carrying capacity. This stiffness is accomplished through the use of multiple plies. In the run-flat condition, destructive forces are imposed upon this relatively stiff region resulting in irreparable damage to the tire. Similarly, if a standard aircraft tire is insufficiently pressurized, the resulting flexure of this stiff region can have similar results. It would be highly advantageous to develop an aircraft tire that is free from requiring such stiffness. It would be further advantageous if an aircraft tire was of increased resiliency so as to deflect to a greater extent during operation.

To date, closed torus tires have not come into use for many applications involving great loadings and high speeds. In closed torus tires, heat can be generated by movement of the tire across the supporting rim assembly. Typically this movement, termed "scrubbing", occurs cyclically, with the greatest motion across the tire-rim interface occurring at the point at which the tire is most greatly loaded. In some instances scrubbing can result in partial erosion of rim contacting portions of the tire. Hence, closed torus tires have not been utilized in aircraft tire and wheel assemblies. It would therefore be advantageous if a closed torus tire could be developed for use on aircraft.

The present invention is directed to overcoming one or more of the problems set forth above.

## Disclosure of the Invention

In one aspect of the present invention, a tire and wheel assembly has a closed torus, substantially oval tire which has first and second shoulder portions. The tire further has a toroidal radial ply, said radial ply totally encircling a central cavity of

-5-

the tire.  The tire and wheel assembly also has a rim assembly which itself has first and second edge portions and at least one elastomeric element positioned on one of said rim edge portions.  The tire is mounted on the rim assembly with at least one of said shoulder portions abutting said elastomeric element.

Conventional aircraft tires have numerous inherent disadvantages.  Prime among these is that bead restraining portions must be included on the rim for restraining the outward axial force exerted by the bead portion of each shoulder.  The conventional tire is principally maintained on the rim by the interference fit between the tire and rim.  Should the tire lose pressure the tire easily becomes dislocated, with potentially disastrous results.  An additional difficulty is that the high pressures and impacts on aircraft tire and wheel assemblies can exert such a tremendous force on the bead restraining portion that failure of the rim can occur.  In the present invention a beadless tire is utilized in an aircraft tire and wheel assembly and these difficulties are avoided by differences in the construction of the tire and rim. For example, means are provided for decreasing the rate of heat build-up in the operating tire.  The tire and wheel assembly of the present invention can run flat or bottom out without rendering the aircraft uncontrollable.

Brief Description of the Drawings

Fig. 1 shows in diagrammatic cross section an embodiment of the present invention incorporating a two-piece rim;

Fig. 2 shows in diagrammatic cross section a portion of another embodiment of the present invention incorporating a one-piece rim; and

Fig. 3 shows in diagrammatic cross section a portion of a third embodiment of the present invention incorporating a two-piece rim.

Best Mode for Carrying Out the Invention

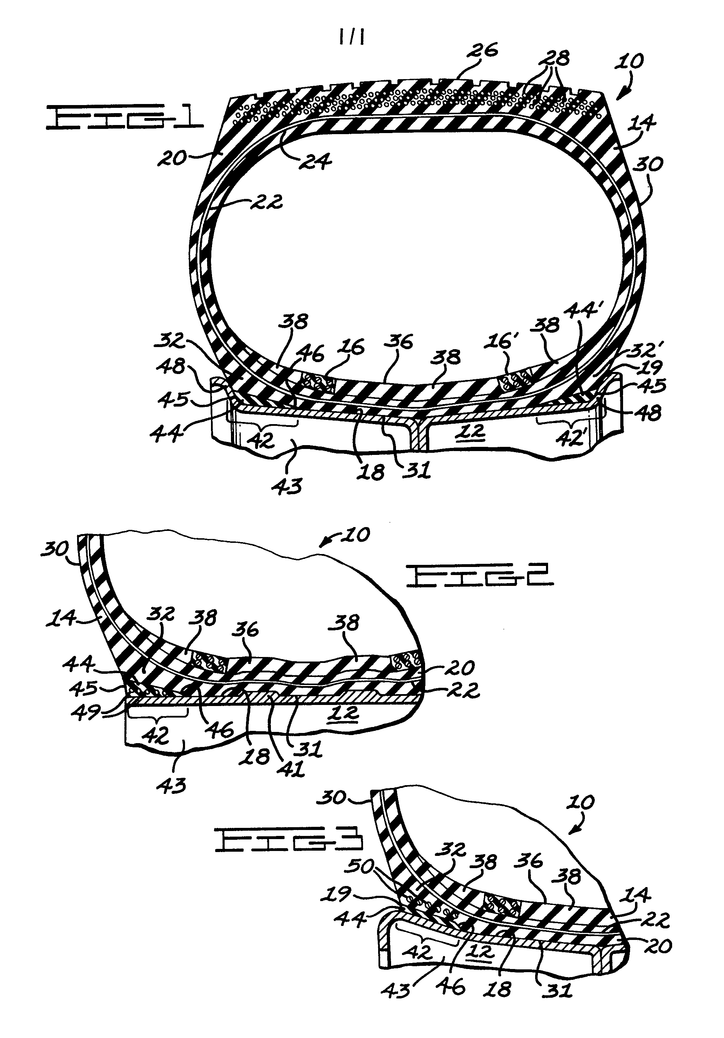

Referring to Fig. 1, a tire and wheel assembly embodying certain of the principles of the present invention is generally indicated by the reference numeral 10. The embodiment described below relates to, for example, a 41" O.D. tire and wheel assembly. Those skilled in the art will recognize that the following description may be adapted to permit the construction of similar tire and wheel assemblies of other sizes. Though precise specifications will hereafter be provided for certain aspects of the preferred embodiment of the present invention, other dimensions could be employed with success, the present invention not being limited to the specific dimensions provided.

In the preferred embodiment, the tire and wheel assembly 10 has a rim assembly 12 and a pneumatic, elastomeric closed torus tire 14 retained on said rim assembly 12 by an interference fit established intermediate a pair of roll restraining hoops 16,16' and a tire contacting periphery 18 of said rim assembly 12. The tire 14 and rim assembly 12 define a bounds of tire-rim contact 19.

The tire 14 has an elastomeric carcass 20 through which a radial ply 22 extends. The radial ply 22 preferably includes a single band of radially wrapped first reinforcing element such as a steel wire 24. This reinforcing element 24 is preferably layed at 5 ends/inch measured at the O.D. of the tire 14. The radial ply 22 is preferably formed of a continuous wire wound so as to define a toroidal surface. It is advantageous to leave the radial ply 22 free from any breaks or discontinuities. At the radially inner and outer portions of the radial ply 22, the reinforcing element 24 assumes a substantially straight path as best shown in Fig. 1. Consequently, the reinforcing element 24 is substantially normal to a mid-circumferential plane of the tire 14. Each loop of the reinforcing element 24 is substantially semicircular at the sidewall region and is generally flat adjacent a tread portion 26 of the tire 14.

A tread portion 26 is located at the outer diameter of the tire 14. This tread portion 26 preferably includes three concentric belts 28. The belts 28 are each composed of Kevlar. Kevlar is a known tradename for a high strength polyamide manufactured by the DuPont Corp. of Delaware, U.S.A. The cords of each of the belts 28 are layed at approximately 10 ends/inch. These belts 28 are wrapped with the cords lying in the plane of rotation of the tire 14. It is important in the manufacture of this tire 14 that a proper bond between the rubber and Kevlar be attained.

The use of Kevlar or some other material having a similarly high strength to weight ratio is a significantly advantageous feature of the present invention. For example, 1500/3/5 Kevlar has a tensile strength of 820 lbs. and a weight of about .002 lbs./foot while 7/4/.28 steel has a tensile strength of 845 lbs. and a weight of .0096 lbs./foot. Compared to steel, on a per weight basis, Kevlar has nearly 4 1/2 times the strength. Nylon has a strength to weight ratio inferior even to that of steel. Hence, a tire incorporating Kevlar cords as opposed to steel or Nylon can be made substantially lighter in the tread portion 26. This greatly decreases both the overall tire 14 weight and the centrifugal forces imposed upon the tire 14.

These belts 28 are not sized identically to those typically utilized in earthmover-typed closed torus tires. It has been found to be desirable that the belts 28 incorporated in the high strength tire and wheel assembly 10 of the present embodiment extend significantly further in an axial direction than those in existing closed torus tires. Preferably, these belts 28 extend, as shown in Fig. 1, to substantially overlie the sidewalls 30 of the tire 14. This proves highly advantageous in restraining the great centrifugal forces imposed upon these tires 20 when utilized in high velocity applications.

The tire 14 also has a rim contacting portion 31. First and second shoulder portions 32,32' adjacent the bounds of tire-rim contact 19 form a portion of the rim contacting portion 31. As shown in Fig. 1, these shoulder portions 32 are thickened portions intermediate the rim assembly 12 and the radial ply 11 underlying that portion of the radial ply 22 which curves away from the rim assembly 12.

One of the roll restraining hoops 16,16' corresponds to each of the shoulder portions, 32,32'. Each roll restraining hoop 16,16' is, as shown in Fig. 1, located inwardly of the corresponding shoulder portion 32,32' and preferably overlies a portion of the radial ply 22 which, in radial cross section, is preferably free of substantial curvature. The roll restraining hoops 16,16' are preferably composed of an array of a plurality of steel wires embedded in rubber. This array is, in cross section, substantially rectangular and, as shown, is oriented at about an 11° angle with respect to the axis of rotation of the tire 14. The dimensions of the roll restraining hoops 16,16' are so selected as to provide a significant interference fit between the tire 14 and rim assembly 12.

The roll restraining hoops 16,16' are positioned inward from the shoulder portions 32,32'. This permits the radial ply 22 to flex in a portion of the tire 14 where a sidewall 30 of the tire 14 joins the rim contacting portion 31 of the tire 14. Owing to the roll restraining hoops 16,16' being offset inwardly from this boundary of tire, 14-rim assembly 12 contact, this flexing is somewhat, but not deleteriously, restrained. As will be appreciated by those skilled in the art, were the roll restraining hoops 16,16' positioned too far outward, the required flex of the radial ply 22 would be limited to a smaller region. Such a concentration of strain can result in overstrain damage to the radial ply 22. However, it is important, as will later be discussed in greater detail, to position the roll restraining hoops 16,16' as far outward as is permitted by considerations of radial ply 22 overstrain. This serves to minimize relative motion between the tire 14 and rim assembly 12.

The tire 14 has an inner inside diameter surface 36. This surface 36 is, as shown in Fig. 1, substantially smooth and free from sharp edges so as to prevent damage to the tire 14 should the tire 14 be in a run-flat situation. In a run-flat situation the tread portion 26 contacts the inner inside diameter surface 36. Rendering this surface 36 relatively flat in radial cross section improves the support for the tread portion 26 and markedly improves the run-flat performance. Creation of this smooth supportive surface 36 can be accomplished by the addition of elastomeric fillets 38 positioned adjacent the projecting roll restraining hoops 16 to present a relatively smooth surface and provide a non-destructive support of the treat portion 26 during run-flat situations.

The rim assembly 12 includes a metallic rim 43, which is preferably a right cylindrical split rim as shown in Fig. 2. It is preferable that this split rim include two increased O.D. hoop restraining portions 41, each being adjacent and slightly interior to a corresponding one of the roll restraining hoops 16. These increased O.D. portions 41 aid in maintaining the tire 14 free from axial dislocation.

Alternatively, the metallic rim 43 may be a two-piece rim, as shown in Fig. 1. Preferably this two-piece rim is tapered at between $3^{\circ}$ and $9^{\circ}$ and results in the rim assembly 12 being of increasing diameter with increasing axial distance from the center of the rim assembly 12.

The metallic rim 43 has first and second circumferential rim edge portions 42,42' distal from a plane circumferentially bisecting the rim assembly 12. First and second annular elastomeric elements 44,44' are affixed to the rim assembly 12 at a location adjacent the respective one of the rim edge portions 42,42'. Preferably, as shown in Figs. 1 and 2, this is an annular element fashioned of rubber having a wedge-shaped cross section. The elastomeric elements 44,44' may include circumferentially extending strengthening members 49 as shown in Fig. 2. This annular elastomeric element 44 has an outer edge 45. As shown, the wedge 44,44' is oriented with its thickest portion nearest the rim edge portions 42. The connection of the elastomeric elements 44,44' to the rim assembly 12 is preferably by bonding, such as by vulcanization or bonding agents. Preferably, the annular elastomeric elements 44,44' do not extend to a position intermediate the corresponding one of the roll restraining hoops 16,16' and the metallic rim 43. Hence, such an extension would not be significantly detrimental if thin, that is, less than about 6 mm, but such an extension is generally undesirable since, as the thickness of elastomeric material intermediate each roll restraining hoop 16 and the metallic rim 43 increases, the likelihood of slippage of the tire 14 on the rim assembly 12 also increases.

In an alternate embodiment, shown in Fig. 3, the annular elastomeric elements 44,44' have a substantially constant thickness. An end 46 of the elastomeric elements 44,44' nearest the center of the rim assembly 12 can be tapered to support the rim assembly contacting portion 31 of the tire 14 intermediate the constant thickness portion of the elastomeric element 44 and that portion of metallic rim 43,47 in direct contact with the tire 14.

As shown in Figs. 1-3, each of the elastomeric elements 44,44' preferably contacts substantially all of that portion of the rim assembly contacting periphery 31 of the tire 14 which is more distal from the circumferential plane of symmetry of the tire 14 than are the roll restraining hoops 16,16'. That is, each of the elastomeric elements 44,44' extends from a position adjacent a roll restraining hoop 16,16' to a position adjacent the bounds of tire-rim contact 19. The metal-rubber interface between the tire 14 and the rim assembly 12 intermediate ach of the roll restraining hoops 16,16' and the correspnding one of the rim edge portions 42,42' is consequently minimized or eliminated.

In the embodiments described heretofore, the rim assembly 12 preferably comprises a right cylindrical metallic rim 43 with the annular elastomeric element 44 affixed therefor. In an alternative embodiment incorporating two-piece rims 47, as shown in Figs. 1 and 3, it is also desirable to incorporate the annular elastomeric elements 44 described above.

In certain tire and wheel assemblies 10, especially those incorporating wedge-type annular elastomeric elements 44,44', it is desirable that the rim edge portions 42,42' have a flange portion 48 extending into contact with the outer end of the elastomeric element 46. In one embodiment, it is preferred that this flange portion 48 contact the entirety of the outer edge 45 of the elastomeric element 44. This results in the annular elastomeric element 44 being totally enclosed by the tire 14 and the metallic rim portion 43, as shown in Fig. 1. This total containment of the annular elastomeric member 44 mitigates the possibility of it being plasticly deformed or extruded under large impact loading conditions.

It is further preferable that the flange portion 48 extend radially outward to contact the outer edge 45, reverse, and extend radially inward. This flange portion 48 then presents a smooth surface to the sidewalls 30 of the tire 14 and minimizes the likelihood of damage to the sidewalls 30 should they be forced into contact with the flange portion 48, such as in a run-flat situation. This is shown in Fig. 1.

In certain applications, it is preferred that the flange portion 48 extend not only around the annular element outer face 45, but also around the shoulder portion 32 of the tire 14. In such embodiment, it is especially preferable that the metallic rim 43 turn downward to form a smooth surface. This contact with the shoulder portion 32 provides additional support to this region and protect the tire in situations of great flexure.

As is apparent, numerous combinations of elastomeric elements 44 of various profiles and metallic rim 43 of various configurations may be utilized to obtain a functional elastomeric element 44 - tire 14 interface and eliminate non-bonded rubber-metal contact at locations axially outward from each roll restraining hoop 16. This interface may, in cross section, be defined by a curve as well as by a line or series of intersecting lines.

In the present invention, it is not necessary that there be any additional elastomeric element intermediate the two roll restraining hoops 16. The detrimental scrubbing is believed to occur proximate the shoulder portion 32, hence it is this region that it is most desirable for the motion to be restrained.

As an alternative or addition to the use of annular elastomeric elements 44, the means for mitigating scrubbing may include strengthening elements 50 positioned in the shoulder portion 32 of the tire 14.. The strengthening elements 50 are preferably substantially inextensible elements positioned within the shoulder and extending circumferentially through the tire 14.

The strengthening elements 50 are preferably formed of a coil of metal or cord passing through each shoulder 32, as shown in Fig. 3. This coil has a plurality of continuous loops extending circumferentially through each shoulder 32 and are substantially coaxial with the tire 14. Alternatively, these strengthening elements 50 can be a plurality of closed loops or rings. It should also be understood that the strengthening elements 50 can be a single closed loop of metal or cord passing through each shoulder 32.

Preferably, the strengthening elements 50 are located intermediate the radial ply 22 and the rim contacting surface 28 of each shoulder 34. The term "intermediate" is intended to mean "between or in contact with." Thusly, a portion of each strengthening elements 50 can form a portion of the rim contacting portion 32 of the tire 14. The strengthening elements 50, irrespective of their configuration, should be of a construction sufficient for establishing an improved interference fit between the rim contacting portion of the shoulder 34 and the rim 12. More particularly, these strengthening elements 50 are adapted to render the rim contacting portion 31 of the shoulder 32 less susceptible to circumferential expension, and be sized to induce compression of the carcass material intermediate the strengthening elements 50 and the rim assembly 12. Additionally, they should stiffen the carcass material adjacent the rim assembly 12 and minimize or eliminate circumferential and axial buckling. Furthermore, they are sized, tensioned and positioned so as to avoid deleterious restrain on the radial ply 22. It is preferable to size the strengthening elements 50 so that the interference fit they impose between the rim 12 and the tire 14 is less than that imposed by the roll restraining hoops 32.

It is preferable to use low hysterisis rubber in the construction of this tire 14 for minimizing heat generation within the tire 14. The portions of the tire 14 most benefiting from the use of low hysterisis rubber are the thread portion 26 and the shoulder portions 32. Suitable low-hysterisis rubbers are well known to those skilled in the art.

Industrial Applicability

This high strength tire 14 is used to greatest advantage for high load, high rotational velocity applications such as use on type VII aircraft. Of course, it may also be used to advantage on other type aircraft. This tire 14 and the tire and wheel assembly 10 incorporating it are a substantial improvement over those in existance from the standpoints of simplicity, safety and performance.

The use of means for mitigating scrubbing decreases internal resistance of the tire 14 to rolling and hence yields a tire and wheel assembly 10 having a lower rate of heat generation than those currently used. This lessened heat build-up is beneficial in that it serves to decrease the rate at which the tire 14 deteriorates and renders the tire 14 relatively stronger when operating under given conditions than tires not incorporating this means for mitigating scrubbing. The lessened scrubbing is also beneficial in that erosion of the shoulder portions 32 of the tire 14 is decreased.

We have found that the use of a lightweight, high strength belt material, such as Kevlar, permits a closed torus tire to be utilized for high velocity applications while minimizing the number of belts required. The use of a widened belt provides several additional advantages, prime among these being that the belted tread portion can be used to restrain the centrifugal force imposed upon the sidewalls of the tire.

We have found that great advantages are to be derived from the use of closed torus tires having a radial ply. As will be appreciated by those skilled in the art, the use of such a tire eliminates the need for the bead restraining portions as presently required on existing aircraft rims. With the elimination of the need for bead restraining portions, there is a lessened danger of rim damage caused by the great forces imposed on these bead restraining portions by the beads of the tire.

An additional advantage is that with the tire no longer being held onto the rim by means of air pressure forcing the beads into the bead restraining portions, there is a lessened, if not eliminated, chance of dislocation of the tire relative to the rim.

The force exerted by the roll restraining hoops 16 on the rim assembly 12 is independent of the pressure of the tire 14, consequently the tire 14 of the present invention remains bound to the rim assembly 12 even in a zero pressure condition.

The relatively low sidewall stiffness of the tire and wheel assembly 10 of the present invention is advantageous. This flexibility of the tire 14 of the tire and wheel assembly 10 permits increased deflection and establishes a more even load distribution between a plurality of wheels 10 mounted on a single aircraft and mitigates the damage done to runways by large, heavy aircraft.

We have also discovered that modification of the inner inside diameter surface 36 of the tire 14 will not only permit the tire 14 to bottom out on landing with no significant damage, but to also operate for a protracted period in the run-flat condition while experiencing damage sufficiently insignificant to permit the aircraft to come to a safe stop. Prior closed torus tires, common to the tire incorporated in the present invention, include substantially inelastic roll restraining hoops. In one aspect of the present invention, damage to the tread portion 26, resulting from loaded contact with the roll restraining hoops 16, is avoided through the inclusion of elastomerics fillets 38. These fillets 38 serve to eliminate projection of the roll restraining hoops 16 above the inner inside diameter surface 36, consequently providing a substantially continuous smooth support for the tread portion 26 during the bottomed out or run-flat condition.

The high strength tire 14 is further advantageous over existing aircraft tires through the elimination of beads. The beads of conventional aircraft tires are restrained from outward axial movement only by the rim. The tremendous forces which are imposed upon the rim by the otherwise unrestrained beads can cause fragmentation of the rim. The present tire 14 is a closed toroid which permits the forces imposed upon the opposite sidewalls 30 of the tire 14 to be internally supported. As a result, the rim assembly 12 of the high strength tire 14 need not support the tremendous axial forces imposed upon rims of existing aircraft tires. Hence, the chance of rim failure is substantially decreased, if not eliminated.

It should be noted that the use of the annular elastomeric element also serves to decrease the possibility of intrusion of grit between the tire 14 and rim assembly 12.

Other aspects, objects, and advantages of the present invention can be obtained from a study of the drawings, the disclosure and the appended claims.

The invention may be summarized as follows:

1. An aircraft tire and wheel assembly (10) comprising:

a closed torus substantially oval tire (14) having first and second shoulder portions (32,32'), a toroidal radial ply (22) itself having at least one toroidally wound reinforcing element (24), said reinforcing element (24) being substantially normal to a mid-circumferential plane of said tire (14), and a circumferential belt (28) positioned radially outward of said radial ply (22); and

a rim assembly (12) having first and second edge portions (42,42') and first and second elastomeric elements (44,44') each positioned on a respective rim edge portion (42,42'), said tire (14) being mounted on said rim assembly (12) with at least one portion of each first and second tire shoulder portion (32,32') abutting a respective one of said elastomeric elements (44,44').

2. The aircraft tire and wheel assembly (10), as set forth in      1, wherein said elastomeric elements (44,44') are annular and coaxial with said rim assembly (12).

3. The aircraft tire and wheel assembly (10), as set forth in      2, wherein said rim assembly (12) includes a metallic rim (43), said elastomeric elements (44,44') being bonded to said rim (43).

4. The aircraft tire and wheel assembly (10), as set forth in      2, wherein said elastomeric elements (44,44') include a circumferentially extending strengthening member (49).

5. The aircraft tire and wheel assembly (10), as set forth in    2, wherein said rim assembly (12) includes a metallic rim (43), said elastomeric element (44) being maintained on said metallic rim (43) by an interference fit.

6. The aircraft tire and wheel assembly (10), as set forth in    4, wherein said strengthening member (49) includes a coil of metal.

7. The aircraft tire and wheel assembly (10), as set forth in    1, wherein said closed torus tire (14) ·includes at least one strengthening element (50) extending through at least one of said shoulder portions (32), said strengthening element (50) being coaxial with said tire (14).

8. The aircraft tire and wheel assembly (10), as set forth in    7, wherein said strengthening element (50) includes a coil of a substantially inextensible material.

9. The aircraft tire and wheel assembly (10), as set forth in    3, wherein said closed torus tire (14) includes at least one strengthening element (50) extending circumferentially through each of said shoulder portions (32),· said strengthening elements (50) being of a construction sufficient to bias said shoulder portions (32) against said rim assembly (12).

10. The aircraft tire and wheel assembly (10), as set forth in    1, wherein said elastomeric elements (44,44') have an outer edge (45) being free from abutment with the corresponding one of said shoulder portions (32,32'), and wherein said rim edge portions (42,42') extending radially outward and being in contact with the corresponding one of said outer edges (45).

11. The aircraft tire and wheel assembly (10), as set forth in 10, wherein each of said elastomeric element outer edges (45) is in full face abutment with a portion of the corresponding one of said rim edge portions (42,42').

12. The aircraft tire and wheel assembly (10), as set forth in 10, wherein said elastomeric elements (44,44') are enclosed by said tire (14) and rim assembly (12).

13. The aircraft tire and wheel assembly (10), as set forth in . 6, wherein said tire (14) has sidewall portions (30), at least one of said rim edge portions (42,42') being in contact with the corresponding one of said shoulder portions (32,32') at a location adjacent the corresponding one of said sidewall portions (30).

14. The aircraft tire and wheel assembly (10), as set forth in . 1, wherein said closed torus tire (14) includes:
an inner inside diameter (36) proximate said rim assembly (12);
a circumferentially extending roll restraining hoop (16) proximate said inner inside diameter (36); and
at least one fillet (38) adjacent said roll restraining hoop (16) and forming a portion of said inner inside diameter (36), said fillet (38) being adapted to prevent said roll restraining hoop (16) from projecting substantially above said inner inside diameter (36).

15. The aircraft tire and wheel assembly, as set forth in 3, wherein said tire (14) includes a toroidal radial ply (22);

roll restraining hoops (16,16') overlying said radial ply (22) and being positioned adjacent said rim assembly (12), said roll restraining hoops (16) forming an inner inside diameter surface (36) of said tire (14); and

at least one elastomeric fillet (38) abutting at least one of said roll restraining hoops (16,16') and establishing an inner inside diameter surface (36) substantially free from roll restraining hoops projecting therefrom.

16. An aircraft having a plurality of tire and wheel assemblies (10), said tire and wheel assemblies (10) comprising:

a closed torus substantially oval tire (14) having first and second shoulder portions (32,32'), a toroidal radial ply (22) itself having at least one toroidally wound reinforcing element (24), said reinforcing element (24) being substantially normal to a mid-circumferential plane of said tire (14), and a circumferential belt (28) positioned radially outward of said radial ply (22); and

a rim assembly (12), said rim assembly (12) having a metallic rim (43), said metallic rim (43) having first and second edge portions (42,42'), said rim assembly (12) further having first and second elastomeric elements (44,44') each positioned on a corresponding one of said rim edge portions (42,42'), said tire (14) being mounted on said rim assembly (12) with at least one portion of each first and second tire shoulder portion (32,32') abutting a corresponding one of said elastomeric elements (44,44').

a substantially annular metallic rim (43) having first and second rim edge portions (42,42'), said rim edge portions (42,42') being coaxial with said metallic rim (43) and being one on either side of and distal from a plane perpendicularly bisecting the axis of said metallic rim (43);

first and second annular elastomeric elements (44,44') each being coaxial with and supported by a corresponding one of said first and second rim edge portions (42,42'); and

a closed torus tire (14) having a toroidal radial ply (22), a belt (28) coaxial with said tire (14) and external said radial ply (22), and first and second shoulder portions (32,32'), said tire (14) being mounted on said metallic rim (43) with each of said first and second annular elastomeric elements (44,44') contacting at least a portion of the corresponding one of said shoulder portions (32,32'), said tire (14) having first and second circumferentially extending roll restraining hoops (16,16') adjacent the corresponding one of said first and second shoulder portions (32,32'), said tire (14) being free of having a rigid member rigidly connect said first and second roll restraining hoops (16,16') one to the other.

17. The aircraft tire and wheel assembly, as set forth in         3, wherein said tire (14) includes:

18. An aircraft tire and wheel assembly (10) comprising:

a substantially annular metallic rim (43) having first and second rim portions (42,42'), said rim edge portions (42,42') being coaxial with said metallic rim (43) and being one on either side of and distal from a plane perpendicularly bisecting the axis of said metallic rim (43);

first and second annular elastomeric elements (44,44') attached to said rim (43), each being coaxial with and supported by a corresponding one of said first and second rim edge portions (42,42'); and

a closed torus tire (14) having a toroidal radial ply (22), a belt (28) coaxial with said tire (14) and external said radial ply (22), and first and second shoulder portions (32,32'), said tire (14) being mounted on said metallic rim (43) with each of said first and second annular elastomeric elements (44,44') contacting at least a portion of the corresponding one of said shoulder portions (32,32'), said tire (14) having first and second circumferentially extending roll restraining hoops (16,16) adjacent the corresponding one of said first and second shoulder portions (32,32'), said roll restraining hoops (16,16') each being positioned inside the space defined by the radial ply (22), said tire (14) being free of having a rigid member rigidly connect said first and second roll restraining hoops (16,16') one to the other.

19. The aircraft tire and wheel assembly, as claimed in 17, wherein said annular elastomeric elements (44,44') are bonded to said metallic rim (43).

0066690

20. The aircraft tire and wheel assembly, as claimed in 17, wherein said elastomeric elements (44,44') include a circumferentially extending strengthening member (40).

Claims

1. An aircraft tire and wheel assembly (10) comprising:

a closed torus substantially oval tire (14) having first and second shoulder portions (32,32'), a toroidal radial ply (22) itself having at least one toroidally wound reinforcing element (24), said reinforcing element (24) being substantially normal to a mid-circumferential plane of said tire (14), and a circumferential belt (28) positioned radially outward of said radial ply (22); and

a rim assembly (12) having first and second edge portions (42,42') and first and second elastomeric elements (44,44') each positioned on a respective rim edge portion (42,42'), said tire (14) being mounted on said rim assembly (12) with at least one portion of each first and second tire shoulder portion (32,32') abutting a respective one of said elastomeric elements (44,44').

2. The aircraft tire and wheel assembly (10), as set forth in claim 1, wherein said elastomeric elements (44,44') are annular and coaxial with said rim assembly (12).

3. The aircraft tire and wheel assembly (10), as set forth in claim 2, wherein said rim assembly (12) includes a metallic rim (43), said elastomeric elements (44,44') being bonded to said rim (43).

4. The aircraft tire and wheel assembly (10), as set forth in claim 2, wherein said elastomeric elements (44,44') include a circumferentially extending strengthening member (49).

5. The aircraft tire and wheel assembly (10), as set forth in claim 2, wherein said rim assembly (12) includes a metallic rim (43), said elastomeric element (44) being maintained on said metallic rim (43) by an interference fit.

6. The aircraft tire and wheel assembly (10), as set forth in claim 4, wherein said strengthening member (49) includes a coil of metal.

7. The aircraft tire and wheel assembly (10), as set forth in claim 1, wherein said closed torus tire (14) ·includes at least one strengthening element (50) extending through at least one of said shoulder portions (32), said strengthening element (50) being coaxial with said tire (14).

8. The aircraft tire and wheel assembly (10), as set forth in claim 7, wherein said strengthening element (50) includes a coil of a substantially inextensible material.

9. The aircraft tire and wheel assembly (10), as set forth in claim 3, wherein said closed torus tire (14) includes at least one strengthening element (50) extending circumferentially through each of said shoulder portions (32),· said strengthening elements (50) being of a construction sufficient to bias said shoulder portions (32) against said rim assembly (12).

10. The aircraft tire and wheel assembly (10), as set forth in claim 1, wherein said elastomeric elements (44,44') have an outer edge (45) being free from abutment with the corresponding one of said shoulder portions (32,32'), and wherein said rim edge portions (42,42') extending radially outward and being in contact with the corresponding one of said outer edges (45).

FIG.1

FIG.2

FIG.3